# EUROPÄISCHE PATENTSCHRIFT

(11) **EP 1 273 161 B1**
(45) Veröffentlichungstag und Bekanntmachung des Hinweises auf die Patenterteilung: **17.03.2010**
(21) Anmeldenummer: 01936217.7
(22) Anmeldetag: 10.04.2001
(51) Int. Cl.: H04M 3/42, H04M 1/247

(54) **VERFAHREN UND ANORDNUNG ZUR STEUERUNG VON DIENSTEN IN EINEM TELEKOMMUNIKATIONSNETZ**
METHOD AND ARRANGEMENT FOR CONTROLLING SERVICES IN A TELECOMMUNICATION NETWORK
PROCEDE ET SYSTEME DE COMMANDE DE SERVICES DANS UN RESEAU DE TELECOMMUNICATION

(30) Priorität: 13.04.2000 AT 6412000
(43) Veröffentlichungstag der Anmeldung: 08.01.2003
(73) Patentinhaber: SIEMENS AKTIENGESELLSCHAFT, 80333 München (DE)
(72) Erfinder: KEMEN, Stanislav, 851 06 Bratislava 5 (SK); KOKESCH, Manfred, A-1130 Wien (AT); KRÄUTLER, Gerald, A-1110 Wien (AT); VIZAEI, Mohammad, 1220 Wien (AT)
(74) Vertreter: Maier, Daniel Oliver
(86) Internationale Anmeldenummer: PCT/EP2001/004086
(87) Internationale Veröffentlichungsnummer: WO 2001/080541

(56) Entgegenhaltungen:
- EP-A- 0 797 336

## Beschreibung

### Technisches Gebiet:

Die Erfindung betrifft ein Verfahren zur Steuerung von Diensten in einem Telekommunikationsnetz mittels Telekommunikationsendgerät,
- wobei mittels Eingabevorrichtung des Telekommunikationsendgerätes Steuerbefehle ausgewählt und zu einer Steuerbefehlsfolge zusammengefügt werden,
- wobei diese Steuerbefehlsfolge gespeichert wird und
- wobei der entsprechende Dienst durch Aktivierung dieser Steuerbefehlsfolge angefordert wird.
Weiterhin betrifft die Erfindung eine Anordnung zur Durchführung des Verfahrens.

### Stand der Technik:

Moderne Telekommunikationsnetze bieten dem Benutzer eine Vielzahl von Diensten, die meist mittels Eingabe auf der Tastatur eines Telekommunikationsendgerätes in Anspruch genommen werden können. Die Übermittlung der Anforderung eines Dienstes vom Telekommunikationsendgerät des Teilnehmers zur Vermittlungsstelle erfolgt dabei etwa mit Hilfe eines Befehlscodes, um die zu sendenden Datenmengen möglichst gering zu halten und um die Namen der Dienste auf Zeichenketten abzubilden, die sich mit den begrenzten Mitteln einer Tastatur eines Telekommunikationsendgerätes darstellen lassen.

Die genannten Dienste und die entsprechenden Befehlscodes sind beispielsweise Bestandteil des Standards für Integrated Services Digital Network, kurz ISDN, und umfassen auszugsweise:
- Anrufweiterleitung
- Anklopfen
- Dreierkonferenz
- Rufnummernanzeige

Weitere Dienste sind zum Beispiel im Standard für Central Office Exchange, kurz CENTREX, definiert. Dieser Standard enthält unter anderem folgende Funktionen:
- Rufunterscheidung von externen und internen Anrufern
- Anzeige des Namens des Anrufers
- Anrufübernahme

Die von einer Vermittlungsstelle angebotenen Dienste und die entsprechenden Befehlscodes können aufgrund verschiedener Hersteller oder Betreibergesellschaften variieren und umfassen darüber hinaus nur eine Teilmenge aller denkbaren Dienste. Der Erfolg dieser Dienste hängt also ganz wesentlich davon ab, dass die potentiellen Benutzer nicht nur die angebotenen Dienste, sondern auch ihre Abbildung auf den einzugebenden Befehlscode kennen. Wesentlich für die Akzeptanz durch die Benutzer ist dabei auch, dass die Nutzung der Dienste möglichst einfach erfolgen kann.

Üblicherweise werden vom Dienstleister deshalb gedruckte Informationsblätter über Art und Vorgehensweise bei der Nutzung der angebotenen Dienste in Umlauf gebracht.

Aus der US 4,605,825, "Function key assignments in a key telephone system" vom 5. März 1984 ist es bekannt, dass der Benutzer eines Telekommunikationsendgerätes aus einem Satz von Befehlscodes, der im Telekommunikationsendgerät gespeichert ist, einige Befehlscodes auswählen und den Funktionstasten auf dem Telekommunikationsendgerät zuordnen kann. Für die Nutzung des Dienstes ist die Kenntnis und die Eingabe eines Befehlscodes bei Aufruf dieses Dienstes also nicht erforderlich.

Für die Inanspruchnahme einiger Dienstes ist die Angabe zusätzlicher Parameter erforderlich, wie zum Beispiel die Eingabe der Zielrufnummer bei der Anforderung einer Rufumleitung. Der Benutzer eines Telekommunikationsendgerätes muss daher wissen bei welchen Diensten die Eingabe zusätzlicher Parameter erforderlich ist und in welcher Weise diese Eingabe zu erfolgen hat. Die Teilnehmer in einem Telekommunikationsnetz bedienen sich dabei üblicherweise der gedruckten Informationsblätter des Betreibers des Telekommunikationsnetzes.

Aus der EP 0 797 336 A2 ist dazu ein Telekommunikationsendgerät bekannt, mit dem es möglich ist, Steuerbefehle auf einfache Weise aus Steuerbefehlskomponenten zusammenzufügen und in ein Telekommunikationsnetz zu übermitteln. Mit diesem Telekommunikationsendgerät wird darüber hinaus auch die Abfrage und die einfache Eingabe von benutzerspezifischen Parametern, wie etwa einer Rufnummer, verfügbar gemacht. Das in der zitierten Schrift offenbarte Verfahren weist dabei eine hinsichtlich der Abfolge von Prozessschritten starre Struktur auf, wobei der durch die einzelnen Schritte gebildete, lineare Ablauf seitens des Benutzers eines Telekommunikationsendgerätes in vorgegebener Weise parametriert werden kann.

Aus der WO 98/2854 A1 ist weiterhin ein Verfahren zur Steuerung eines Kommunikationsendgerätes bekannt, bei dem die Steuerbefehle aus einem Befehlsspeicher abrufbar sind. Die Steuerbefehle weisen zumindest teilweise einzeln abrufbare Steuerbefehl-Komponenten auf. Eine frei wählbare Folge von Steuerbefehl-Komponenten ist unter einem bestimmten Namen speicherbar beziehungsweise einer Funktionstaste zuordenbar und wird für einen späteren Abruf bereitgehalten.

In der Schrift EP 0 613 277 A1 ist ein Telekommunikationsnetz offenbart, das die Befehle zur Steuerung seiner bereitgestellten Dienste an ein oder mehrerer Endgeräte überträgt und dies den Befehlstasten des Endgerätes zuordnet. Die Programmierung der einzeln abrufbaren Befehlsfolgen erfolgt mittels FSK-Signalisierung, gesteuert durch das Netzwerk, beziehungsweise werden dem Endgerät mittels Chip-Karte zur Verfügung gestellt.

In der EP 0 434 071 A2 und der GB 2 291 563 A wird ebenfalls ein Verfahren beschrieben, wie in einem Endgerät eine Steuerbefehlsfolge programmiert und unter anderem ein benutzerspezifischer Parameter abgefragt_werden kann. Die in den beiden zitierten Schriften offenbarten Verfahren weisen eine hinsichtlich der Abfolge von Prozessschritten starre Struktur auf. Dieser durch die einzelnen Schritte gebildete, starre Ablauf kann dann seitens des Benutzers eines Telekommunikationsendgerätes in vorgegebener Weise parametriert werde.

Die US 5 832 074 offenbart schließlich ein weiteres Verfahren zur Speicherung einer Steuerbefehlsfolge in einem Telekommunikationsendgerät. Hierbei kann eine automatische Ausführung des jeweiligen Steuerbefehls wahlweise nur einmal zu einem bestimmten Zeitpunkt oder zyklisch wiederholt erfolgen. Die Programmstruktur ist dabei seitens des Telekommunikationsendgerätes vorgegeben und kann durch den Benutzer insofern parametriert werden, dass für die Ausführung eines Programms ein einziger Startzeitpunkt eingegeben werden kann.

Die erwähnten Probleme gelten dabei sowohl für Teilnehmer in einem öffentlichen, als auch für Teilnehmer in einem privaten Telekommunikationsnetz.

Weiterhin entsprechen die von einem Betreiber eines Telekommunikationsnetzes angebotenen Dienste nicht immer den individuellen Bedürfnissen der Teilnehmer in diesem Telekommunikationsnetz. Die Teilnehmer benötigen nämlich oft auch Dienste, die aus wirtschaftlichen oder technischen Gründen weder von den Betreibern der Telekommunikationsnetze, noch von den Herstellern der Telekommunikationsendgeräte verfügbar gemacht werden.

### Darstellung der Erfindung:

Der Erfindung liegt daher die Aufgabe zugrunde, ein Verfahren zur Steuerung von Diensten in einem Telekommunikationsnetz anzugeben, welches den Zugriff auf diese Dienste in besonders einfacher Weise ermöglicht, sowie eine Anordnung zur Durchführung des Verfahrens.

Dies geschieht erfindungsgemäß mit einem Verfahren der eingangs erwähnten Art,
- bei dem als Steuerbefehl die Abfrage eines benutzerspezifischen Parameters vorgesehen wird und/oder
- bei dem als Steuerbefehl die zyklisch wiederholte Ausführung zumindest eines Teils der Steuerbefehlsfolge vorgesehen wird und/oder
- bei dem als Steuerbefehl die Ausführung zumindest eines Teils der Steuerbefehlsfolge in Abhängigkeit eines vorgegebenen Zustandes vorgesehen wird und/oder
- bei dem als Steuerbefehl die Ausführung zumindest eines Teils der Steuerbefehlsfolge aufgrund des Eintretens eines vorgegebenen Ereignisses vorgesehen wird.

Für den Benutzer eines Telekommunikationsendgerätes ist der Zugang zu Diensten eines Telekommunikationsnetzes somit wesentlich vereinfacht, da beim Aufruf weder Kenntnisse über Befehlscodes zur Anforderung eines Dienstes, noch Kenntnisse über die Art und Weise wie Parameter, die für den Aufruf eines Dienstes nötig sind, angegeben werden müssen. Überdies sind die Steuerbefehle individuell kombinierbar, sodass die Anforderung eines Dienstes optimal auf den Benutzer abgestimmt werden kann.

Durch die zunehmende Einbindung von Sprachdaten in die Computer-Datennetze ist eine Anwendung des erfindungsgemäßen Verfahrens überdies nicht nur bei klassischen Sprachnetzen möglich, sondern auch bei Telekommunikationsnetzen, die beispielsweise nach dem unter dem Begriff "Voice over Internet Protocol" bekannten Verfahren arbeiten.

Besonders vorteilhaft ist es, wenn als Steuerbefehl die Abfrage eines benutzerspezifischen Parameters vorgesehen wird. Dieser Parameter kann beispielsweise die für einen Weckruf erforderliche Weckzeit sein oder die Zielrufnummer bei einer Rufnummernumlenkung. Die Abfrage kann dabei beispielsweise über eine entsprechende Ausgabe auf der Anzeigeneinheit des Telekommunikationsendgerätes erfolgen. Aufgrund der Anzeige wird der entsprechende Parameter dann über die Eingabeeinheit des Telekommunikationsendgeräte eingegeben. Denkbar ist aber auch, dass benutzerspezifische Werte gespeichert und beim Ablauf der Steuerbefehlsfolge abgefragt, beziehungsweise übernommen werden. Ein Beispiel hierfür wäre eine Rufnummernumlenkung zur Rufnummer in Speicherzelle A. Diese Speicherzelle wird vor Aktivierung der Steuerbefehlsfolge vom Benutzer mit der gewünschten Rufnummer belegt. Vorteilhaft ist, dass die Rufnummer bei der Aktivierung der Rufnummernumlenkung nicht jedes mal neu eingegeben werden muss, die Zielrufnummer jedoch trotzdem jederzeit geändert werden kann. Denkbar ist weiterhin, dass eine Speicherzelle von verschiedenen Steuerbefehlsfolgen ausgelesen werden kann.

Vorteilhaft ist es weiterhin, wenn als Steuerbefehl die zyklisch wiederholte Ausführung zumindest eines Teils der Steuerbefehlsfolge vorgesehen wird. Denkbar ist, dass eine Sprachnachricht automatisch an mehrere Teilnehmer des Telekommunikationsnetzes weitergeleitet werden soll. Ein weiteres Beispiel wäre die Abfrage eines Telefongebührenstandes, die etwa wöchentlich erfolgen kann.

Eine weitere vorteilhafte Variante der Erfindung ist mit einem Verfahren gegeben, bei dem als Steuerbefehl die Ausführung zumindest eines Teils der Steuerbefehlsfolge in Abhängigkeit eines vorgegebenen Zustandes vorgesehen wird. Auf diese Weise kann zum Beispiel eine Rufnummernumlenkung realisiert werden, die in Abhängigkeit von der Zeit eingehende Rufe zu verschiedenen Zielrufnummern weiterleitet. Denkbar ist auch eine Rufnummernumlenkung, die eingehende Rufe in Abhängigkeit von der Rufnummer des rufenden Teilnehmers zu verschiedenen Zielrufnummern weiterleitet.

Vorteilhaft ist es weiterhin, wenn als Steuerbefehl die Ausführung zumindest eines Teils der Steuerbefehlsfolge aufgrund des Eintretens eines vorgegebenen Ereignisses vorgesehen wird. Ein solches Ereignis kann beispielsweise das Drücken einer Funktionstaste des Telekommunikationsendgerätes sein. Denkbar ist es auch, dass ein kommender Ruf eines bestimmten Teilnehmers als solches Ereignis angesehen wird. Beispielsweise kann eine voreingestellte Rufumlenkung durch einen solchen Anruf aktiviert oder deaktiviert werden.

Vorteilhaft ist es, wenn die auszuwählenden Steuerbefehle während eines vor der Auswahl und dem Zusammenfügen der Steuerbefehle ablaufenden Initialisierungsvorganges im Telekommunikationsendgerät gespeichert werden. Auf diese Weise können die Steuerbefehle schon bei der Herstellung des Telekommunikationsendgerätes in dieses gespeichert werden, sodass der Benutzer dann aus diesem Satz von Steuerbefehlen auswählen kann.

Besonders vorteilhaft ist es,
- wenn die auszuwählenden Steuerbefehle während eines Initialisierungsvorganges im Telekommunikationsnetz gespeichert werden und
- wenn vor der Auswahl und dem Zusammenfügen der Steuerbefehle diese von der Vermittlungsstelle, an die das Telekommunikationsendgerät angeschlossen ist, an das Telekommunikationsendgerät übermittelt werden.
Für den Benutzer eines Telekommunikationsendgerätes ist der Zugang zu Diensten eines Telekommunikationsnetzes somit wesentlich vereinfacht, da das Telekommunikationsendgerät Informationen erhält, welche Dienste verfügbar sind und mit welchem Steuerbefehl diese aufgerufen werden. Für den Betreiber einer Vermittlungsstelle entfällt das aufwendige Herstellen und Verteilen von Informationsblättern für die Nutzung der Dienste, insbesondere auch bei einer Änderung der Dienste. Weiterhin sind Telekommunikationsendgeräte und Vermittlungsstellen beliebig austauschbar, da die entsprechenden Steuerbefehle immer von der Vermittlungsstelle zur Verfügung gestellt werden.

Eine günstige Variante der Erfindung sieht ein Verfahren vor, bei dem die Steuerbefehlsfolge im Telekommunikationsendgerät gespeichert wird. Vorteilhaft ist, dass bei diesem Verfahren keine Verbindung zwischen Telekommunikationsendgerät und Telekommunikationsnetz bestehen muss. Weiterhin besteht die Möglichkeit vorgefertigte Steuerbefehlsfolgen schon bei der Herstellung des Telekommunikationsendgerätes zu speichern und diese so für die Benutzer der Telekommunikationsendgeräte verfügbar zu machen.

Günstig ist es weiterhin, wenn die Steuerbefehlsfolge vom Telekommunikationsendgerät an die Vermittlungsstelle, an die das Telekommunikationsendgerät angeschlossen ist, übermittelt und im Telekommunikationsnetz gespeichert wird. Auf diese Weise kann gegebenenfalls auch von einem anderen Telekommunikationsendgerät auf die Steuerbefehlsfolgen zugegriffen werden, beziehungsweise stehen auch dann noch zur Verfügung, wenn ein Telekommunikationsendgerät gegen ein neueres ausgetauscht wird. Überdies ist für den Betreiber eines Telekommunikationsnetzes, sei es ein privates oder ein öffentliches, die Möglichkeit gegeben, vorgefertigte Steuerbefehlsfolgen für die Benutzer der Telekommunikationsendgeräte im betreffenden Telekommunikationsnetz zur Verfügung zu stellen.

Besonders vorteilhaft ist es, wenn die Steuerbefehlsfolge die Anforderung von Diensten in drahtgebundenen Telekommunikationsnetzen umfasst, insbesondere Dienste, die im Standard für Integrated Services Digital Networks, kurz ISDN, oder im Standard für Central Office Exchange, kurz CENTREX, definiert sind. Ein Großteil der möglichen Dienste wurde nämlich im ISDN-Standard spezifiziert, welcher aufgrund des Standes der Technik vergleichsweise bedeutsam ist. Im CENTREX-Standard sind zusätzliche Funktionen für Gruppen von Telekommunikationsendgeräten definiert. Dieser gewinnt aufgrund der fortschreitenden Zentralisierung zunehmend an Bedeutung.

Vorteilhaft ist es auch, wenn die Steuerbefehlsfolge die Anforderung von Diensten in Mobilfunknetzen umfasst, insbesondere Dienste, die im Standard Global System for Mobile Communication, kurz GSM, im Standard Universal Mobile Telecommunications System, kurz UMTS, oder im Wireless Application Protocol, kurz WAP, definiert sind. Aufgrund der vergleichsweise großen Verbreitung von Mobiltelefonen kommt diesen Diensten hohe Bedeutung zu. Durch die Komplexität und die hohe, ständig steigende Anzahl derartiger Dienste wird überdies ein Verfahren benötigt, das dem Benutzer eines Telekommunikationsendgerätes einfachen Zugang zu diesen Diensten ermöglicht.

Gelöst wird die Aufgabe auch mit einer Anordnung zur Durchführung des Verfahrens,
- bei der ein Telekommunikationsendgerät an eine Vermittlungsstelle angeschlossen ist,
- bei der diese Vermittlungsstelle Teil eines Telekommunikationsnetzes ist,
- bei der eine Eingabevorrichtung des Telekommunikationsendgerätes Mittel zur Auswahl und zur Kombination von Steuerbefehlen zu einer Steuerbefehlsfolge umfasst,
- bei der das Telekommunikationsendgerät Mittel zum Speichern dieser Steuerbefehlsfolge beinhaltet und
- bei der diese Eingabevorrichtung Mittel zur Aktivierung dieser Steuerbefehlsfolge umfasst.
Eine Anordnung dieser Art ermöglicht dem Benutzer eines Telekommunikationsendgerätes also die Definition und die Aktivierung einer Steuerbefehlsfolge. Im Regelfall ist seitens des Benutzers bei der Aktivierung der Steuerbefehlsfolge nur eine einziges Kommando über die Eingabevorrichtung, anstatt mehrerer Eingaben für jeden einzelnen Steuerbefehl erforderlich. Der Aufruf eines komplexen Ablaufes zur Anforderung eines Dienstes wird somit wesentlich vereinfacht.

Ein vorteilhafte Anordnung erhält man, wenn das Telekommunikationsendgerät Mittel zur Auflistung der verfügbaren Steuerbefehle und der Steuerbefehlsfolgen umfasst, insbesondere optische und akustische Mittel. Dadurch wird für den Benutzer die Übersicht über die vorhandenen Steuerbefehle und die Steuerbefehlsfolgen wesentlich erleichtert. Vorteilhaft werden dazu ohnehin vorhandene Ausgabeeinheiten des Telekommunikationsendgerätes verwendet, wie zum Beispiel eine optische Anzeigeeinheit oder ein Lautsprecher im Telekommunikationsendgerät. Die Art der Darstellung hängt dabei wesentlich von den Gegebenheiten des Ausgabemediums ab. So kann die Auflistung bei einer alphanumerischen Anzeigeeinheit beispielsweise ein- oder mehrzeilig, beziehungsweise ein- oder mehrspaltig ausgeführt sein. Bei einer Sprachausgabe werden dagegen vorwiegend sequentielle Aufzählungen zur Anwendung kommen, es sei denn, es erfolgt eine Steuerung durch ein Spracherkennungsverfahren.

Besonders vorteilhaft ist es,
- wenn für die Eingabevorrichtung des Telekommunikationsendgerätes zumindest eine Funktionstaste des Telekommunikationsendgerätes vorgesehen ist,
- wenn der Betätigung einer Funktionstaste die Eingabe zumindest eines Kommando zugeordnet ist,
- wenn für die Auswahl der Steuerbefehle die Eingabe eines ersten Kommandos vorgesehen ist,
- wenn für die Kombination der Steuerbefehle zu einer Steuerbefehlsfolge die Eingabe eines zweiten Kommandos vorgesehen ist und
- wenn der Aktivierung des durch Steuerbefehlsfolge gebildeten Ablaufes die Eingabe eines dritten Kommandos zugeordnet ist.
Um die Anzahl der Funktionstasten in Grenzen zu halten kann dabei eine Funktionstaste auch mit mehreren Kommandos belegt sein. Auf die einzelnen Kommandos kann beispielsweise durch gleichzeitiges Drücken einer Umschaltetaste und der Funktionstaste zugegriffen werden. Weiterhin können Funktionstasten zum Beispiel auch menüartigen Darstellungen der verfügbaren Kommandos auf der Anzeigeeinheit des Telekommunikationsendgerätes zugeordnet sein. Diese Funktionstasten, deren Funktion also durch die Angabe auf der Anzeigeeinheit festgelegt wird, sind auch unter dem Begriff "Softkeys" bekannt. Innerhalb einer Gruppe von Telekommunikationsendgeräten kann die gleiche Belegung der Funktionstasten vorgesehen sein, sodass ein Wechsel zwischen Telekommunikationsendgeräten innerhalb einer Gruppe für die Benutzer möglichst einfach erfolgen kann.

Vorteilhaft ist es auch,
- wenn für die Eingabevorrichtung des Telekommunikationsendgerätes ein Modul zur Verarbeitung von gesprochenen Kommandos vorgesehen ist,
- wenn für die Auswahl der Steuerbefehle die Eingabe eines ersten Kommandos vorgesehen ist,
- wenn für die Kombination der Steuerbefehle zu einer Steuerbefehlsfolge die Eingabe eines zweiten Kommandos vorgesehen ist und
- wenn der Aktivierung des durch die Steuerbefehlsfolge gebildeten Ablaufes die Eingabe eines dritten Kommandos zugeordnet ist.
Die Eingabe eines Kommandos ist für einen Benutzer eines Telekommunikationsendgerätes auf diese Weise ohne Betätigen einer Taste des Telekommunikationsendgerätes möglich. Werden beispielsweise der Auswahl eines Steuerbefehls mehrere Kommandos zugeordnet, so kann diese Auswahl etwa mit den Kommandos "Steuerbefehl 1 wählen", "Steuerbefehl 1 auswählen" oder "Befehl 1 wählen" erfolgen. Die Eingabe eines Kommandos ist für den Benutzer somit noch einfacher.

Eine besonders vorteilhafte Ausgestaltung der Erfindung erhält man mit einer Anordnung,
- bei der für die Eingabevorrichtung des Telekommunikationsendgerätes eine Anzeigeeinheit des Telekommunikationsendgerätes vorgesehen ist,
- bei der einem Bereich dieser Anzeigeeinheit zumindest ein Kommando zugeordnet ist,
- bei der für die Auswahl der Steuerbefehle die Eingabe eines ersten Kommandos vorgesehen ist,
- bei der für die Kombination der Steuerbefehle zu einer Steuerbefehlsfolge die Eingabe eines zweiten Kommandos vorgesehen ist und
- bei der der Aktivierung des durch die Steuerbefehlsfolge gebildeten Ablaufes die Eingabe eines dritten Kommandos zugeordnet ist.
Die Anzeigeeinheit dient hierbei gleichzeitig als Eingabemedium, weswegen im wesentlichen auf zusätzliche Tasten verzichtet werden kann. Diese Technik ist auch unter dem Begriff "Touchscreen" bekannt, wobei die Erfassung des berührten Bereiches auf verschiedene Weise erfolgen kann und nicht notwendigerweise ein mechanisches Berühren der Anzeigeeinheit voraussetzt.

Günstig ist es, wenn als Telekommunikationsendgerät ein drahtgebundenes Telefon, insbesondere ein ISDN-Telefon oder ein CENTREX-Endgerät, vorgesehen ist. Gerade diese Klasse von Geräten bietet aufgrund der technischen Gegebenheiten eine Vielzahl von Diensten. Ein einfacher Zugang zu diesen Diensten und die Möglichkeit diese an persönliche Bedürfnisse anzupassen ist für drahtgebundene Telefone daher besonders wünschenswert.

Günstig ist es auch, wenn als Telekommunikationsendgerät ein Mobiltelefon vorgesehen ist. Noch mehr als bei drahtgebundene Telefonen wird, nach dem gegenwärtigem Stand, bei diesen Geräten die Funktion von sich rasch ändernden Anforderungen bestimmt. Umso mehr ist es daher notwendig, einen einfachen Zugang zu den Diensten in einem Telekommunikationsnetz zu schaffen und das Anpassen an persönliche Bedürfnisse zu ermöglichen.

Bester Weg zur Ausführung der Erfindung:

Die Erfindung wird anhand eines in den Figuren dargestellten Ausführungsbeispiels näher erläutert, welches eine beispielhafte Anordnung zur Eingabe einer Steuerbefehlsfolge und eine beispielhafte Steuerbefehlsfolge selbst betrifft.

### Beschreibung der Zeichnungen:

Figur 1: Anordnung zur Durchführung des erfindungsgemäßen Verfahrens;
Figur 2: Benutzerdefinierte Zustands-Anreiz-Verzweigung zur Verarbeitung auftretender Anreize;
Figur 3: Benutzerdefinierte Prozedur zum zeitabhängigen Einlegen einer Rufumleitung.

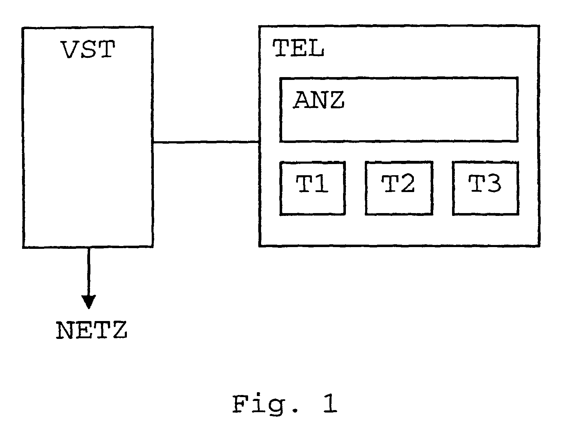

Figur 1 zeigt eine Anordnung zur Durchführung des erfindungsgemäßen Verfahrens, welche eine Vermittlungsstelle VST und ein daran angeschlossenes Telekommunikationsendgerät TEL umfasst. Durch einen von der Vermittlungsstelle VST weisenden Pfeil in ein Telekommunikationsnetz NETZ wird symbolisiert, dass die Vermittlungsstelle VST Teil dieses Netzes ist. Das Telekommunikationsendgerät TEL umfasst eine Anzeigeeinheit ANZ und eine erste, eine zweite und eine dritte Funktionstaste T1..T3.

Die Funktion der beispielhaften Anordnung ist wie folgt, wobei eine Eingabe einer benutzerdefinierten Steuerbefehlsfolge betrachtet werden soll.

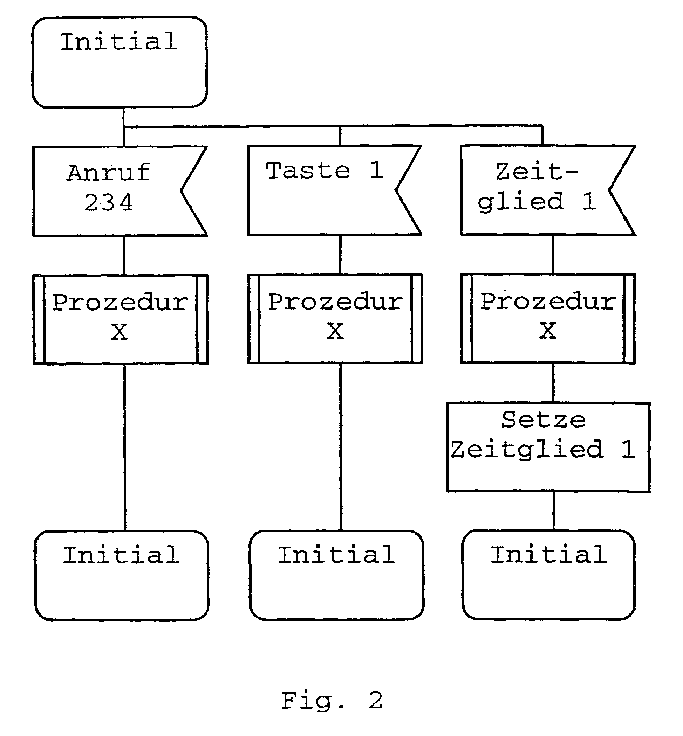

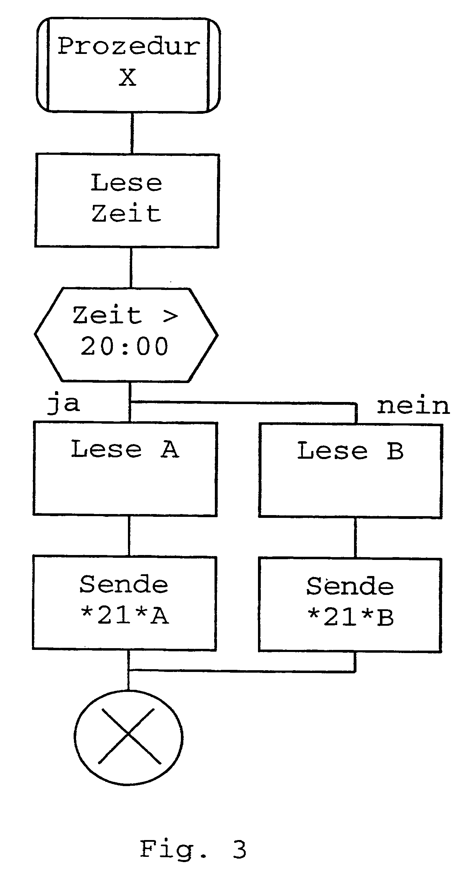

Während eines Initialisierungsvorganges werden die verfügbaren Steuerbefehle in der Vermittlungsstelle VST gespeichert. Der Benutzer des Telekommunikationsendgerätes TEL fordert bei der Erstellung einer Steuerbefehlsfolge durch Drücken der ersten Funktionstaste T1 die verfügbaren Steuerbefehle von der Vermittlungsstelle VST an. Diese werden von der Vermittlungsstelle VST an das Telekommunikationsendgerät TEL übermittelt und in Form einer Liste auf der Anzeigeeinheit ANZ des Telekommunikationsendgerätes TEL angezeigt. Durch erneutes Drücken der ersten Funktionstaste T1 wählt der Benutzer einen der verfügbaren Steuerbefehle aus und fügt ihn durch Drücken der zweiten Funktionstaste T2 an das Ende der zu erstellenden Steuerbefehlsfolge. Diese Vorgangsweise wird so lange wiederholt, bis die erwünschte Steuerbefehlsfolge erstellt wurde. Durch Drücken der dritten Funktionstaste T3 wird die Steuerbefehlsfolge im Telekommunikationsendgerät TEL gespeichert. Ein Beispiel für eine Steuerbefehlsfolge wird anhand der Figur 2 und der Figur 3 erläutert.

Figur 2 zeigt eine benutzerdefinierte Zustands-Anreiz-Verzweigung zur Verarbeitung auftretender Anreize. Ausgehend von einem Zustand Initial führt ein Zweig zu einem ersten Anreiz Anruf 234, ein weiterer Zweig zu einem zweiten Anreiz Taste 1 und ein letzter Zweig zu einem dritten Anreiz Zeitglied 1. Der erste Anreiz Anruf 234 führt zu einem Aufruf Prozedur X und in Folge zu einem Zustandswechsel Initial. Das gleiche gilt für den zweiten Anreiz Taste 1. Der dritte Anreiz Zeitglied 1 führt zu einem Aufruf Prozedur X, in Folge zu einer ersten Aktion Setze Zeitglied 1 und abschließend zu einem Zustandswechsel Initial.

Die Funktion der durch die in der Figur 2 veranschaulichten Steuerbefehlsfolge ist wie folgt. Ausgehend von einem Zustand Initial verharrt das System so lange, bis ein erster Anreiz Anruf 234, ein zweiter Anreiz Taste 1 oder ein dritter Anreiz Zeitglied 1 eintritt. Der erste Anreiz Anruf 234 wird durch einen Anruf von einem Teilnehmer mit der Rufnummer 234 bewirkt, führt zum Aufruf Prozedur X und zu einem Zustandswechsel Initial. Prozedur X ist dabei beispielsweise eine vom Benutzer des Telekommunikationsendgerätes TEL festgelegte Prozedur. Ein Beispiel hierfür wird anhand der Figur 3 erläutert. Der Zustandswechsel Initial beschreibt ein Verharren des Systems im Zustand Initial. Das Auftreten des zweiten Anreizes Taste 1 wird durch das Drücken der ersten Funktionstaste T1 bewirkt, führt ebenfalls zu einem Aufruf Prozedur X und zu einem Zustandswechsel Initial. Der dritte Anreiz Zeitglied 1 tritt beim Ablauf eines ersten Zeitgliedes ein, führt wiederum zu einem Aufruf Prozedur X, in Folge zu einer Aktion Setze Zeitglied 1, mit Hilfe derer das erste Zeitglied mit einem bestimmten Wert initialisiert wird, und einem Zustandswechsel Initial. Mittels erstem Zeitglied wird das Verstreichen der durch den Initialwert bestimmten Zeit festgestellt. Das Ablaufen der Zeit bewirkt wiederum den dritten Anreiz Zeitglied 1, wodurch der beschriebene Ablauf zyklisch wiederholt wird.

Figur 3 zeigt eine benutzerdefinierte Prozedur zum zeitabhängigen Einlegen einer Rufumleitung. Ausgehend von einem Prozedurstart Prozedur X folgt eine zweite Aktion Lese Zeit und eine Verzweigung Zeit>20:00. Ein positiver Zweig ja führt zu einer dritten Aktion Lese A und in Folge zu einer vierten Aktion Sende *21*A. Ein negativer Zweig nein führt zu einer fünften Aktion Lese B und in Folge zu einer sechsten Aktion Sende *21*B. Der positive Zweig ja und der negative Zweig nein werden daraufhin wieder zusammengeführt und führen zu einem Prozedurende.

Die Funktion der durch die in der Figur 3 veranschaulichten Steuerbefehlsfolge ist wie folgt. Mittels zweiter Aktion Lese Zeit wird die aktuelle Uhrzeit aus dem Speicher des Telekommunikationsendgerätes TEL ausgelesen. Durch die Verzweigung Zeit>20:00 wird in Abhängigkeit von der Uhrzeit der weitere Ablauf bestimmt. Im positiven Zweig ja wird mittels dritter Aktion Lese A der Inhalt einer ersten Speicherzelle ausgelesen. Mit Hilfe der vierten Aktion Sende *21*A wird die Zeichenkette "*21*" mit dem Inhalt der ersten Speicherzelle kombiniert und an die Vermittlungsstelle VST gesendet. "*21*" ist dabei der Befehlscode für eine Rufumleitung, der aber noch mit einer Zielrufnummer erweitert werden muss. Diese Erweiterung wird durch Kombination des Befehlscodes mit dem Inhalt der ersten Speicherzelle, welcher eine Zielrufnummer darstellt, erreicht. Nach dem Senden wird die Steuerbefehlsfolge an der Stelle fortgesetzt, an welcher der Aufruf der Prozedur erfolgt ist. Der durch den negativen Zweig nein gebildete Ablauf entspricht dem Ablauf im positiven Zweig ja, jedoch wird mittels fünfter Aktion Lese B der Inhalt einer zweiten Speicherzelle anstatt einer ersten Speicherzelle ausgelesen. Mit Hilfe der sechsten Aktion Sende *21*B wird eine Rufumlenkung zu einer durch die zweite Speicherzelle bestimmten Zielrufnummer von der Vermittlungsstelle VST angefordert.

## Patentansprüche

1. Verfahren zur Steuerung von Diensten in einem Telekommunikationsnetz (NETZ) mittels Telekommunikationsendgerät (TEL), mit folgende Schritten:
- Speichern von auszuwählenden Steuerbefehlen während eines Initialisierungsvorganges im Telekommunikationsnetz (NETZ),
- Übertragen dieser auszuwählenden Steuerbefehle vor einer Auswahl und einem Zusammenfügen an das Telekommunikationsendgerät (TEL),
- in an sich bekannter Weise Auswählen der Steuerbefehle mittels Eingabevorrichtung des Telekommunikationsendgerätes (TEL) und Zusammenfügen zu einer Steuerbefehlsfolge,
- Speichern dieser Steuerbefehlsfolge,
- Anfordern des entsprechenden Dienstes durch Aktivierung dieser Steuerbefehlsfolge und
- dann Ausführen von zumindest einem Teil der Steuerbefehlsfolge, wobei eine Ausführung aufgrund des Eintretens eines benutzerspezifisch vorgegebenen Ereignisses durchgeführt wird.

2. Verfahren nach Anspruch 1 **dadurch gekennzeichnet, dass** als Steuerbefehl die Abfrage eines benutzerspezifischen Parameters vorgesehen wird.

3. Verfahren nach Anspruch 1 oder 2 **dadurch gekennzeichnet, dass** die Ausführung zumindest eines Teils der Steuerbefehlsfolge in zyklisch wiederholter Form erfolgt.

4. Anordnung zur Durchführung des Verfahrens nach Anspruch 1, **dadurch gekennzeichnet,**
- **dass** ein Telekommunikationsendgerät (TEL) an eine Vermittlungsstelle (VST) angeschlossen ist,
- **dass** diese Vermittlungsstelle (VST) Teil eines Telekommunikationsnetzes (NETZ) ist,
- **dass** des Telekommunikationsnetz (NETZ) Mittel zum Speichern von auszuwählenden Steuerbefehlen und zum Übertragen dieser an das Telekommunikationsendgerät (TEL) umfasst,
- **dass** eine Eingabevorrichtung des Telekommunikationsendgerätes (TEL) Mittel zur Auswahl und zur Kombination von Steuerbefehlen zu einer Steuerbefehlsfolge umfasst,
- **dass** das Telekommunikationsendgerät (TEL) Mittel zum Speichern dieser Steuerbefehlsfolge beinhaltet und
- **dass** diese Eingabevorrichtung Mittel zur Aktivierung dieser Steuerbefehlsfolge umfasst,
- **dass** Mittel zum Ausführen von zumindest einem Teil der Steuerbefehlsfolge als Steuerbefehl vorgesehen sind, wobei eine Ausführung aufgrund des Eintretens eines vorgegebenen Ereignisses vorgesehen ist.

5. Anordnung nach Anspruch 4, **dadurch gekennzeichnet, dass** das Telekommunikationsendgerät (TEL) Mittel zur Auflistung der verfügbaren Steuerbefehle und der Steuerbefehlsfolge umfasst, insbesondere optische und akustische Mittel.

6. Anordnung nach einem der Ansprüche 4 bis 5, **dadurch gekennzeichnet,**
- **dass** für die Eingabevorrichtung des Telekommunikationsendgerätes (TEL) zumindest eine Funktionstaste T des Telekommunikationsendgerätes (TEL) vorgesehen ist,
- **dass** der Betätigung einer Funktionstaste (T) die Eingabe zumindest eines Kommandos zugeordnet ist,
- **dass** für die Auswahl der Steuerbefehle die Eingabe eines ersten Kommandos vorgesehen ist,
- **dass** für die Kombination der Steuerbefehle zu einer Steuerbefehlsfolge die Eingabe eines zweiten Kommandos vorgesehen ist und
- **dass** der Aktivierung des durch Steuerbefehlsfolge gebildeten Ablaufes die Eingabe eines dritten Kommandos zugeordnet ist.

7. Anordnung nach einem der Ansprüche 4 bis 5, **dadurch gekennzeichnet,**
- **dass** für die Eingabevorrichtung des Telekommunikationsendgerätes (TEL) ein Modul zur Verarbeitung von gesprochenen Kommandos vorgesehen ist,
- **dass** für die Auswahl der Steuerbefehle die Eingabe eines ersten Kommandos vorgesehen ist,
- **dass** für die Kombination der Steuerbefehle zu einer Steuerbefehlsfolge die Eingabe eines zweiten Kommandos vorgesehen ist und
- **dass** der Aktivierung des durch die Steuerbefehlsfolge gebildeten Ablaufes die Eingabe eines dritten Kommandos zugeordnet ist.

8. Anordnung nach einem der Ansprüche 4 bis 5, **dadurch gekennzeichnet,**
- **dass** für die Eingabevorrichtung des Telekommunikationsendgerätes (TEL) eine Anzeigeeinheit (ANZ) des Telekommunikationsendgerätes (TEL) vorgesehen ist,
- **dass** einem Bereich dieser Anzeigeeinheit (ANZ) zumindest ein Kommando zugeordnet ist,
- **dass** für die Auswahl der Steuerbefehle die Eingabe eines ersten Kommandos vorgesehen ist,
- **dass** für die Kombination der Steuerbefehle zu einer Steuerbefehlsfolge die Eingabe eines zweiten Kommandos vorgesehen ist und
- **dass** der Aktivierung des durch die Steuerbefehlsfolge gebildeten Ablaufes die Eingabe eines dritten Kommandos zugeordnet ist.

## Claims

1. Method for controlling services in a telecommunications network (NETZ) by means of a telecommunications terminal (TEL), having the following steps:
- storage of control instructions to be selected during an initialisation operation in the telecommunications network (NETZ),
- transmission to the telecommunications terminal (TEL) of these control instructions to be selected prior to selection and merging,
- selection in a manner known per se of the control instructions by means of an input apparatus of the telecommunications terminal (TEL) and merging to form a control instruction sequence,
- storage of this control instruction sequence,
- requesting the corresponding service by activating this control instruction sequence and
- then executing at least part of the control instruction sequence, an execution on the basis of the occurrence of a user-specific predefined event being performed.

2. Method according to claim 1, **characterised in that** the interrogation of a user-specific parameter is provided as a control instruction.

3. Method according to claim 1 or 2, **characterised in that** the execution of at least part of the control instruction sequence takes place in cyclically repeated form.

4. Arrangement for carrying out the method according to claim 1,
**characterised in that**
- a telecommunications terminal (TEL) is connected to a switching centre (VST),
- this switching centre (VST) is part of a telecommunications network (NETZ),
- the telecommunications network (NETZ) includes means for storing control instructions to be selected and for transmitting these to the telecommunications terminal (TEL),
- an input apparatus of the telecommunications terminal (TEL) includes means for selecting and for combining control instructions to form a control instruction sequence,
- the telecommunications terminal (TEL) includes means for storing this control instruction sequence and
- this input apparatus includes means for activating this control instruction sequence,
- means for executing at least part of the control instruction sequence as a control instruction are provided, an execution being provided for on the basis of the occurrence of a predefined event.

5. Arrangement according to claim 4, **characterised in that** the telecommunications terminal (TEL) includes means for listing the available control instructions and the control instruction sequence, in particular visual and acoustic means.

6. Arrangement according to one of claims 4 to 5,
**characterised in that**
- for the input apparatus of the telecommunications terminal (TEL) at least one function key T of the telecommunications terminal (TEL) is provided,
- the input of at least one command is assigned to the actuation of a function key (T),
- the input of a first command is provided for the selection of the control instructions,
- the input of a second command is provided for the combination of the control instructions to form a control instruction sequence and
- the input of a third command is assigned to the activation of the sequence of operations formed by a control instruction sequence.

7. Arrangement according to one of claims 4 to 5,
**characterised in that**
- a module for processing spoken commands is provided for the input apparatus of the telecommunications terminal (TEL),
- the input of a first command is provided for the selection of the control instructions,
- the input of a second command is provided for the combination of the control instructions to form a control instruction sequence and
- the input of a third command is assigned to the activation of the sequence of operations formed by the control instruction sequence.

8. Arrangement according to one of claims 4 to 5,
**characterised in that**
- a display unit (ANZ) of the telecommunications terminal (TEL) is provided for the input apparatus of the telecommunications terminal (TEL),
- at least one command is assigned to an area of said display unit (ANZ),
- the input of a first command is provided for the selection of the control instructions,
- the input of a second command is provided for the combination of the control instructions to form a control instruction sequence and
- the input of a third command is assigned to the activation of the sequence of operations formed by the control instruction sequence.

## Revendications

1. Procédé pour la commande de services dans un réseau de télécommunication (NETZ) au moyen d'un terminal de télécommunication (TEL), comprenant les étapes suivantes :
- sauvegarde d'instructions de commande à sélectionner pendant une opération d'initialisation dans le réseau de télécommunication (NETZ),
- transmission de ces instructions de commande à sélectionner avant une sélection et un fusionnement au terminal de télécommunication (TEL),
- d'une façon déjà connue sélection des instructions de commande au moyen du dispositif d'entrée du terminal de télécommunication (TEL) et fusionnement en une séquence d'instructions de commande,
- sauvegarde de cette séquence d'instructions de commande,
- demande du service correspondant par activation de cette séquence d'instructions de commande et
- ensuite exécution d'au moins une partie de la séquence d'instructions de commande, une exécution étant effectuée à la suite de l'occurrence d'un évènement prédéfini de façon spécifique à l'utilisateur.

2. Procédé selon la revendication 1, **caractérisé en ce que** l'interrogation d'un paramètre spécifique à l'utilisateur est prévue comme instruction de commande.

3. Procédé selon la revendication 1 ou 2, **caractérisé en ce que** l'exécution d'au moins une partie de la séquence d'instructions de commande s'effectue dans une forme répétée de façon cyclique.

4. Agencement pour la mise en oeuvre du procédé selon la revendication 1,
**caractérisé en ce que,**
- un terminal de télécommunication (TEL) est raccordé à un centre de commutation (VST),
- **en ce que** ce centre de commutation (VST) fait partie d'un réseau de télécommunication (NETZ),
- **en ce que** le réseau de télécommunication (NETZ) comporte des moyens pour le stockage d'instructions de commande à sélectionner et pour la transmission de ces instructions au terminal de télécommunication (TEL),
- **en ce qu'**un dispositif d'entrée du terminal de télécommunication (TEL) comporte des moyens pour la sélection et pour la combinaison d'instructions de commande en une séquence d'instructions de commande,
- **en ce que** le terminal de télécommunication (TEL) contient des moyens pour la sauvegarde de cette séquence d'instructions de commande et
- **en ce que** ce dispositif d'entrée comporte des moyens pour l'activation de cette séquence d'instructions de commande,
- **en ce que** des moyens pour l'exécution d'au moins une partie de la séquence d'instructions de commande sont prévus comme instruction de commande, une exécution étant prévue à la suite de l'occurrence d'un événement prédéfini.

5. Agencement selon la revendication 4, **caractérisé en ce que** le terminal de télécommunication (TEL) comporte des moyens pour le listage des instructions de commande disponibles et de la séquence d'instructions de commande, en particulier des moyens optiques et acoustiques.

6. Agencement selon l'une quelconque des revendications 4 à 5, **caractérisé en ce que**
- au moins une touche de fonction T du terminal de communication (TEL) est prévue pour le dispositif d'entrée du terminal de télécommunication (TEL),
- **en ce que** l'entrée d'au moins une instruction est attribuée à l'actionnement d'une touche de fonction (T),
- **en ce que** l'entrée d'une première instruction est prévue pour la sélection des instructions de commande,
- **en ce que** l'entrée d'une seconde instruction est prévue pour la combinaison des instructions de commande en une séquence d'instructions de commande et
- **en ce que** l'entrée d'une troisième instruction est attribuée à l'activation du déroulement formé par la séquence d'instructions de commande.

7. Agencement selon l'une quelconque des revendications 4 à 5, **caractérisé en ce que,**
- un module pour le traitement d'instructions parlées est prévu pour le dispositif d'entrée du terminal de télécommunication (TEL),
- **en ce que** l'entrée d'une première instruction est prévue pour la sélection des instructions de commande,
- **en ce que** l'entrée d'une seconde instruction est prévue pour la combinaison des instructions de commande en une séquence d'instructions de commande et
- **en ce que** l'entrée d'une troisième instruction est attribuée à l'activation du déroulement formé par la séquence d'instructions de commande.

8. Agencement selon l'une quelconque des revendications 4 à 5, **caractérisé en ce que**
- une unité d'affichage (ANZ) du terminal de télécommunication (TEL) est prévue pour le dispositif d'entrée du terminal de télécommunication (TEL),
- **en ce qu'**au moins une instruction est attribuée à une zone de cette unité d'affichage (ANZ),
- **en ce que** l'entrée d'une première instruction est prévue pour la sélection des instructions de commande,
- **en ce que** l'entrée d'une seconde instruction est prévue pour la combinaison des instructions de commande en une séquence d'instructions de commande et
- **en ce que** l'entrée d'une troisième instruction est attribuée à l'activation du déroulement formé par la séquence d'instructions de commande.
